# Europäisches Patentamt

## European Patent Office

## Office européen des brevets

(19)

(11) Numéro de publication: **0 168 267**
**B1**

(12) # FASCICULE DE BREVET EUROPÉEN

(45) Date de publication du fascicule du brevet:
23.11.88

(51) Int. Cl.⁴: **H 04 N 5/335**

(21) Numéro de dépôt: **85400852.1**

(22) Date de dépôt: **30.04.85**

(54) Barrette multilinéaire à transfert de charge, et procédé d'analyse.

(30) Priorité: **18.05.84 FR 8407761**

(43) Date de publication de la demande:
**15.01.86 Bulletin 86/3**

(45) Mention de la délivrance du brevet:
**23.11.88 Bulletin 88/47**

(84) Etats contractants désignés:
**DE GB IT NL**

(56) Documents cité:
**PATENTS ABSTRACTS OF JAPAN, vol. 6, no. 25 (E-94)(903), 13 fevrier 1982**
**PATENTS ABSTRACTS OF JAPAN, vol. 5, no. 181 (E-83)(853), 20 novembre 1981**

(73) Titulaire: **THOMSON- CSF, 173, Boulevard Haussmann, F-75379 Paris Cédex 08 (FR)**

(72) Inventeur: **Chabbal, Jean Joseph, THOMSON- CSF SCPI 173, bld Haussmann, F-75379 Paris Cedex 08 (FR)**

(74) Mandataire: **Guérin, Michel, THOMSON- CSF SCPI 19, avenue de Messine, F-75008 Paris (FR)**

## Description

La présente invention concerne une nouvelle structure de barrettes multilinéaires à transfert de charge ainsi que son procédé d'analyse.

Les barrettes multilinéaires sont, en général, constituées par N lignes de P détecteurs photosensibles tels que des photodiodes, chaque ligne recevant successivement le rayonnement à détecter, et par un dispositif permettant de sommer en synchronisme avec le défilement les informations recueillies sur les détecteurs de même rang, ce dispositif étant connu dans la littérature anglo-saxonne sous le nom de "Time Delay Integration" ou TDI.

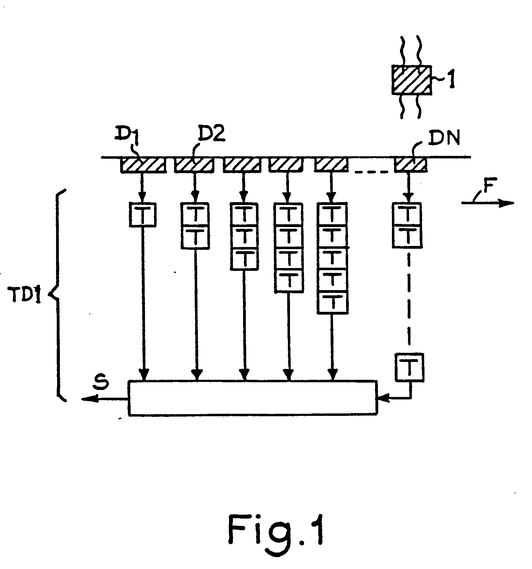

On a représenté schématiquement sur la figure 1 les premiers détecteurs $D_1$, $D_2$, ... $D_N$ de chaque ligne ainsi qu'un dispositif réalisant la fonction TDI pour ces N détecteurs. De même, sur cette figure, on a indiqué par une flèche F allant de gauche a droite le sens de défilement de la barrette devant l'objet ou le corps 1 qui émet le rayonnement à détecter. Pour sommer en phase les informations collectées, il faut leur apporter des retards de valeur T, 2T,... NT, où T est le temps de passage de l'objet ou du corps qui émet le rayonnement devant chaque détecteur. T est aussi le temps d'intégration de chaque détecteur. On a représenté schématiquement sur la figure 1, qu'un retard T est apporté à l'information issue du détecteur $D_1$ avant d'être envoyée sur un sommateur, un retard 2T est apporté à l'information issue du détecteur $D_2$... et ainsi de suite. L'abrégé PATENT ABSTRACTS OF JAPON, vol. 6, n°25 (E 94) (903) 13 février 1982, JP-A 56 146 377 montre un tel dispositif.

Avec les barrettes multilinéaires du type ci-dessus, le temps d'intégration est multiplié par N. Or les bruits de lecture s'ajoutent de façon quadratique. On obtient donc un gain sur le rapport signal sur bruit égal à $\sqrt{N}$. En conséquence, ce type de barrettes photosensibles est particulièrement intéressant pour capter des images radiologiques, car il permet de diminuer la dose de rayons X utilisée pour un même temps d'exposition.

D'autre part, ce type de barrettes photosensibles est aussi utilisé dans l'analyse de documents par contact pour améliorer la résolution dans le sens du défilement du papier.

La présente invention a pour but de fournir une nouvelle structure de barrette multilinéaire à transfert de charge fonctionnant selon le principe du TDI.

En conséquence, la présente invention a pour objet une barrette multilinéaire à transfert de charge comportant N lignes de P détecteurs photosensibles, chaque ligne recevant successivement le rayonnement à détecter, des registres à décalage à transfert de charge qui assurent la sommation en phase des informations collectées sur les détecteurs occupant une même position sur les diverses lignes et un interface entre les détecteurs et les registres, caractérisée en ce que les registres à décalage à transfert de charge sont constitués par un premier registre à entrées parallèles et sorties series comportant N x P étages séparés en groupes de N étages dans lesquels chaque étage est relié par l'intermédiaire de l'interface à un détecteur de même position sur les diverses lignes, ledit registre réalisant le retard et la sommation des informations et par un deuxième registre parallèle comportant au moins P étages, et communiquant avec le premier registre au niveau des $N^{ièmes}$ étages par l'intermédiaire d'une grille de passage ($G_P$), le deuxième registre transférant les charges sommées vers un étage de lecture donnant en sortie uniquement le signal correspondant à la somme des informations collectées sur les détecteurs occupant une même position sur les diverses lignes.

La barrette multilinéaire ci-dessus présente une structure beaucoup plus simple et plus compacte que les barrettes multilinéaires de l'art antérieur ayant le même nombre de lignes. Toutefois, pour des raisons de technologie, cette structure est limitée aux barrettes multilinéaires présentant un nombre de lignes peu important comme les barrettes utilisées pour la mamographie numérisée. En effet, la longueur de N étages dans les registres à décalage est de préférence égale au côté d'un photodétecteur. Or avec les technologies actuelles, la longueur d'un étage est d'au moins 20 microns.

La présente invention concerne aussi un procédé d'analyse de la barrette multilinéaire. Le procédé consiste, à la fin de chaque temps d'intégration, à envoyer les charges intégrées par les détecteurs occupant une même position sur les diverses lignes, dans les étages correspondants du premier registre à décalage à transfert de charge où elles viennent s'ajouter aux charges déjà présentes, à transférer les charges contenues dans les $N^{ièmes}$ étages du premier registre vers les étages correspondants du deuxième registre à décalage puis, dans le premier registre, à transférer d'un étage les charges, et, pendant une partie du temps d'intégration suivant, à transférer les charges du second registre vers l'étage de lecture qui réalise la lecture des P signaux utiles.

D'autres caractéristiques et avantages de la présente invention apparaîtront à la lecture de la description de divers modes de réalisation faite avec référence aux dessins ci-annexés dans lesquels:

- la figure 1, déjà décrite, est un schéma montrant les connexions entre un TDI et les détecteurs $D_1$ à $D_N$ et expliquant le fonctionnement d'un TDI;
- la figure 2 est un schéma d'un premier mode de réalisation d'une barrette multilinéaire à transfert de charge conforme à la présente invention;
- la figure 3 est un schéma expliquant la réalisation de la fonction retard et sommation dans le premier registre;
- la figure 4 est une vue agrandie de la partie réalisant la fonction TDI et lecture dans la barrette de figure 2;
- la figure 5 est un diagramme des différentes phases de commande en fonction du temps, utilisées avec la barrette multilinéaire de la figure 2;
- les figures 6(a) à 6(e) sont respectivement une vue en coupe des registres selon A-A, B-B et C-C dans la figure 3 et des représentations de puits de potentiel expliquant le fonctionnement de la partie TDI;
- la figure 7 est une vue identique à celle de la figure 3 d'un autre mode de réalisation de la partie TDI;

la figure 8 est un diagramme des différentes phases de commande en fonction du temps;
- les figures 9 (a) à 9 (c) sont respectivement une vue en coupe des registres selon A-A, B-B et C-C dans la figure 7 et des représentations des puits de potentiel expliquant le fonctionnement de la partie TDI;
- les figures 10 et 11 sont des représentations schématiques illustrant les possibilités d'utilisation d'une barrette multilinéaire conforme à la présente invention.

Sur les différentes figures, les mêmes références désignent les mêmes éléments, mais pour des raisons de clarté, les côtes et proportions des divers éléments ne sont pas respectées.

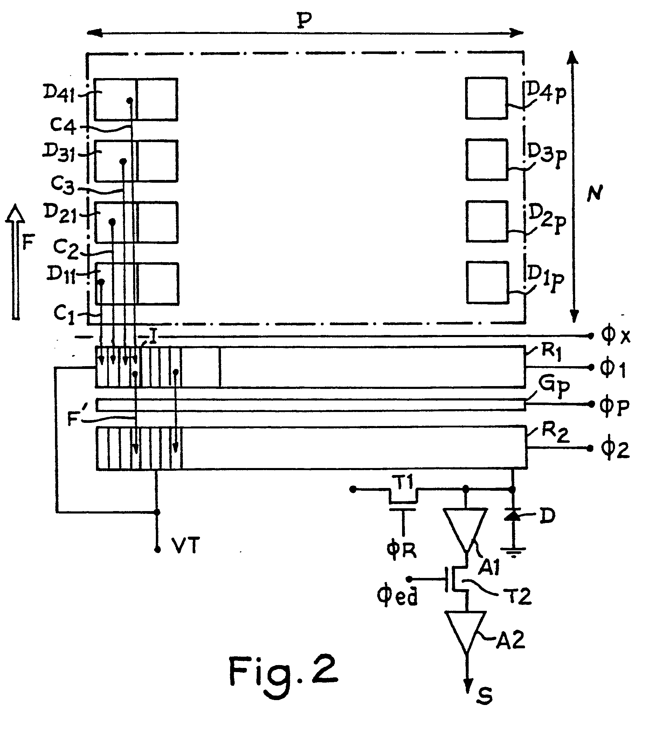

Les figures 2 à 6 concernent un premier mode de réalisation d'une barrette multilinéaire conforme à la présente invention.

Comme représenté sur la figure 2, la barrette multilinéaire de ce mode de réalisation est constituée principalement par une zone photosensible comportant N lignes de P détecteurs $D_{11}$, $D_{21}$, $D_{31}$, $D_{41}$,.... $D_{1P}$,... $D_{4P}$, et par une partie réalisant la fonction TDI.

Cet ensemble est réalisé de préférence sur un même substrat semi-conducteur qui peut être, par exemple, un substrat en silicium de type p. Toutefois, il est évident pour l'homme de l'art que d'autres substrats peuvent être utilisés.

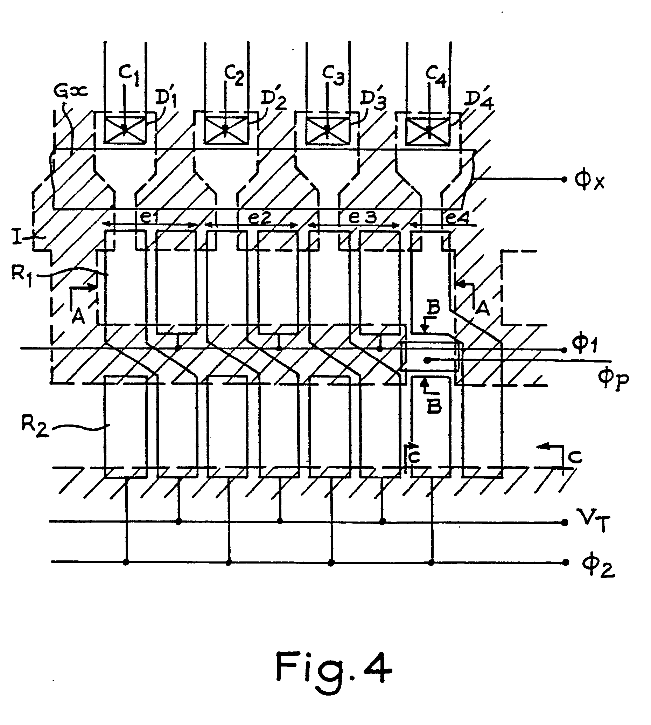

Dans le mode de réalisation représenté, le nombre de lignes N a été choisi égal à 4. Les détecteurs photosensibles $D_{11}$ à $D_{4P}$ sont constitués, par exemple, par des photodiodes. D'autre part, comme représenté plus particulièrement à la figure 2 et à la figure 4, la partie TDI est constituée principalement par deux registres $R_1$ et $R_2$ à décalage à transfert de charge de type CCD pour "charge coupled device" positionnés en parallèle l'un à côté de l'autre. Le premier registre à décalage $R_1$ est un registre à entrées parallèles et sorties séries comportant N x P étages séparés en p groupes de N étages par des barrières d'isolements I. Le deuxième registre à décalage $R_2$ est un registre à entrées parallèles et sortie série qui est relié au premier registre $R_1$ tous les N étages par l'intermédiaire d'une grille de passage $G_P$ portée à un potentiel périodique $\emptyset_P$. Cette liaison entre

le registre $R_1$ et le registre $R_2$ a été symbolisée par la flèche F' sur la figure 2. Les autres étages des registres à décalage $R_1$ et $R_2$ sont séparés les uns des autres par une barrière d'isolement I.

De manière plus spécifique, chaque colonne de quatre détecteurs photosensibles $D_{11}$, $D_{21}$, $D_{31}$, $D_{41}$ est connectée à un ensemble de quatre étages $e_1$, $e_2$, $e_3$, $e_4$ (fig. 4), du registre à décalage à transfert de charge $R_1$ par l'intermédiaire d'une connexion $C_1$, $C_2$, $C_3$, $C_4$ et d'un interface constitué, dans le mode de réalisation représenté, par une grille de passage $G_X$ reliée à un potentiel $\emptyset_X$ et par une diode $D'_1$, $D'_2$, $D'_3$, $D'_4$.

Dans les modes de réalisation représentés, on a utilisé pour les registres $R_1$ et $R_2$ des registres à décalage à transfert de charge monophasé, ce qui permet d'éviter une phase de commande comme expliqué de manière plus détaillée ci-après. Toutefois, il est évident pour l'homme de l'art que l'on peut utiliser des registres à décalage à transfert de charge biphasés ou à un nombre quelconque de phases de commande.

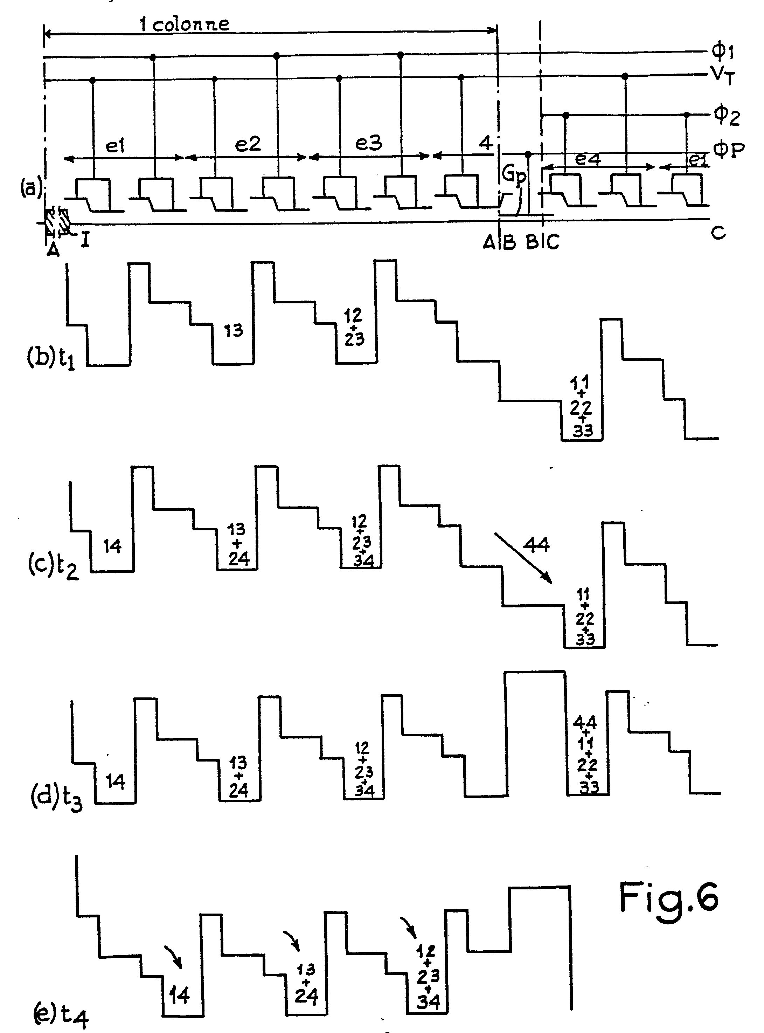

Comme représenté notamment sur la figure 4 et la figure 6 (a), chaque étage des registres à décalage à transfert de charge $R_1$ et $R_2$ est constitue par un couple d'électrodes relié à une phase de commande continue $V_T$ commune pour les deux registres et par un couple d'électrodes relié à une phase de commande alternative $\emptyset_1$ pour le registre $R_1$ et $\emptyset_2$ pour le registre $R_2$. Comme la phase de commande continue $V_T$ est commune aux deux registres $R_1$ et $R_2$, le registre $R_2$ comporte lui aussi N x P étages. Cependant, il est évident pour l'homme de l'art que, dans les cas où $R_2$ est commande indépendamment de $R_1$, le registre $R_2$ doit comporter au moins P étages communiquant avec les $N^{ièmes}$ étages du registre $R_1$. Dans chaque couple, l'une des électrodes est une électrode de stockage et l'autre une électrode de transfert.

D'autre part, pour obtenir un bon transfert entre les registres $R_1$ et $R_2$, lors du passage des charges du registre $R_1$ vers le registre $R_2$ sous contrôle de la phase $\emptyset_P$ appliquée à la grille $G_P$, les couples d'électrodes reliés à la phase commune $V_T$ sont décalés d'un demi-étage.

La dissymétrie dans les potentiels de surface nécessaire pour rendre unilatéral le transfert est réalisée, par exemple, par une surépaisseur d'oxyde comme représenté à la figure 6, ou par une implantation d'impuretés de même type que le substrat.

D'autre part, la sortie série du registre $R_2$ est reliée à un étage de lecture comportant de manière connue une diode de lecture D connectée à un transistor MOS $T_1$ de remise à zéro dont la porte est reliée au potentiel $\emptyset_R$ et le drain à une tension continue $V_R$. La diode D est connectée aussi à un amplificateur $A_1$ lui-même relié à un second amplificateur $A_2$ par l'intermédiaire d'un transistor MOS $T_2$ dont la porte est reliée à un potentiel alternatif $\emptyset$ ech., ledit transistor MOS $T_2$ réalisant une fonction d'échantillonnage et de blocage de manière à obtenir sur la sortie de l'amplificateur $A_2$ un

signal tous les P signaux en sortie du registre $R_2$ et à maintenir ce signal pendant la sortie des N étages suivants.

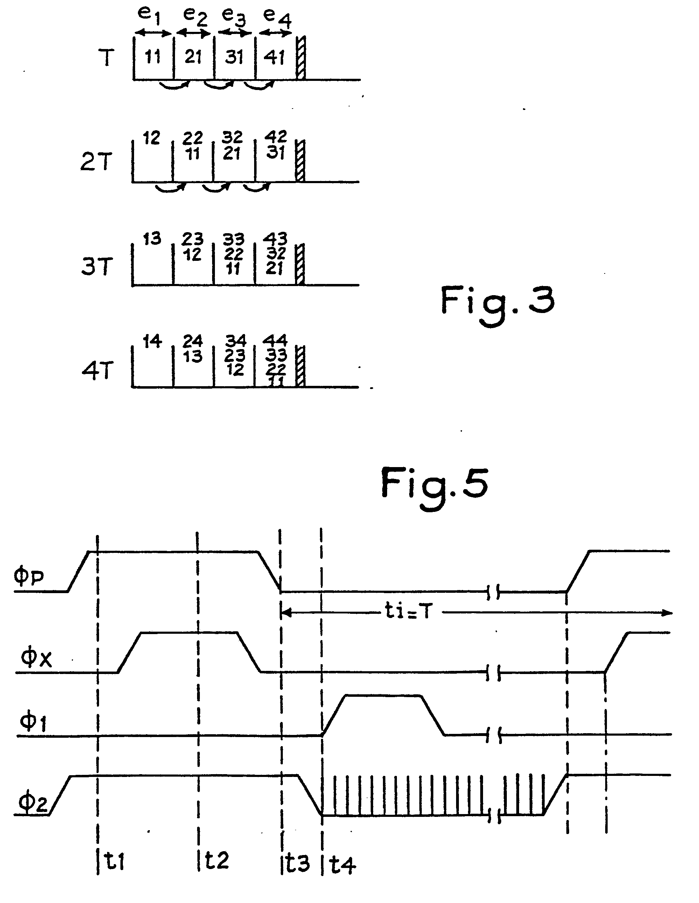

On expliquera maintenant le fonctionnement de la barrette multilinéaire décrite ci-dessus avec référence plus particulièrement aux figures 3, 5 et 6.

Sur la figure 6 (a) pour faciliter la compréhension du dessin on a représenté les différentes coupes A-A, B-B et C-C de la figure 4 dans un même plan.

La figure 3 symbolise la réalisation de la fonction retard et sommation dans le registre $R_1$ au niveau d'une colonne de détecteurs pour obtenir le signal utile.

Après un temps d'intégration T, on a dans les étages $e_1$, $e_2$, $e_3$, $e_4$ du registre $R_1$ des charges 11, 21, 31, 41, correspondant aux charges intégrées respectivement par les photodiodes de la première ligne, de la deuxième ligne, de la troisième ligne, et de la quatrième ligne. A la fin du temps T, on effectue le transfert d'un étage, à savoir les charges 41 ayant été lues de la manière expliquée ci-après, la charge 31 passe dans l'étage $e_4$, la charge 21 dans l'étage $e_3$, la charge 11 dans l'étage $e_2$. Ce transfert est symbolisé par des flèches. A la fin du temps 2T, on intègre à nouveau dans les étages $e_1$, $e_2$, $e_3$, $e_4$ des charges 12, 22, 32, 42, correspondant aux charges lues par les photodiodes des différentes lignes pendant un nouveau temps d'intégration T. Puis on transfère les charges d'un étage comme symbolisé par les flèches et on recommence la même opération pour les temps 3T et 4T. De ce fait, à la fin du temps 4T, on a dans l'étage $e_1$ une charge 14, dans l'étage $e_2$ une charge $24 + 13$, dans l'étage $e_3$ une charge $34 + 23 + 12$ et dans l'étage $e_4$ une charge $44 + 33 + 22 + 11$ qui correspond au signal utile que l'on veut lire, à savoir à la somme des signaux lus successivement par les photodiodes de même position sur les diverses lignes à la fin du balayage des quatre lignes.

On expliquera maintenant avec référence plus particulièrement aux figures 5 et 6, les différentes opérations réalisées pendant un temps d'intégration T. La figure 5 représente en fonction du temps les différents potentiels périodiques $\emptyset_P$, $\emptyset_X$, $\emptyset_1$ et $\emptyset_2$ appliqués respectivement sur les grilles $G_P$, $G_X$, le registre $R_1$ et le registre $R_2$.

Les figures 6 (b) à 6 (e) représentent la forme des puits de potentiel sous les étages de $R_1$, la grille $G_P$ et les étages de $R_2$ aux différents temps $t_1$, $t_2$, $t_3$, $t_4$ du temps d'intégration T.

Au temps $t_1$, les potentiels $\emptyset_P$ et $\emptyset_2$ sont au niveau haut tandis que les potentiels $\emptyset_X$ et $\emptyset_1$ sont au niveau bas. De ce fait, les charges stockées dans l'étage $e_4$ du registre $R_1$ lors du temps d'intégration précédent sont transférées dans l'étage $e_4$ du registre $R_2$, comme représenté sur la figure 6 (b).

Au temps $t_2$, $\emptyset_P$ et $\emptyset_2$ restant au niveau haut le potentiel $\emptyset_X$ est porté à un niveau haut. Il y a alors tranfert, vers les différents étages $e_1$, $e_2$, $e_3$, $e_4$ du registre $R_1$, des charges intégrées pendant le temps d'intégration T sous les photodiodes des différentes lignes.

Comme représenté sur la figure 6 (c), les charges ainsi transférées viennent s'ajouter aux charges existantes dans les différents étages $e_1$, $e_2$, $e_3$ tandis qu'au niveau de l'étage $e_4$ la charge 44 est transférée directement sous l'étage $e_4$ du registre $R_2$.

Ainsi, en commandant convenablement la phase $\emptyset_P$, il est possible de tranférer la charge directement d'une photodiode $D_{4P}$ sous l'étage $e_4$ du registre $R_2$, ce qui permet d'avoir des capacités moins importantes au niveau des étages du registre $R_1$ puisque ces étages réalisent au maximum la somme de trois intégrations, à savoir $11 + 22 + 33$.

Au temps $t_3$, $\emptyset_P$ est ramené au niveau bas ce qui isole le registre $R_2$ du registre $R_1$ comme représenté par la figure 6 (d).

Au temps $t_4$, $\emptyset_1$ est porté au niveau haut, $\emptyset_2$ est porte au niveau bas tandis que $\emptyset_X$ et $\emptyset_P$ restent tous deux au niveau bas.

De ce fait, on transfère les charges des étages $e_1$, $e_2$, $e_3$, se trouvant sous le couple d'électrodes commandé par la phase continue $V_T$ sous le couple d'électrodes commandé par la phase $\emptyset_1$ comme représenté à la figure 6 (e). De même dans le registre $R_2$ on effectue le transfert des charges vers la sortie. Ce transfert est symbolisé par des traits verticaux sur la figure 5 et il a lieu pendant la plus grande partie du temps d'intégration suivant.

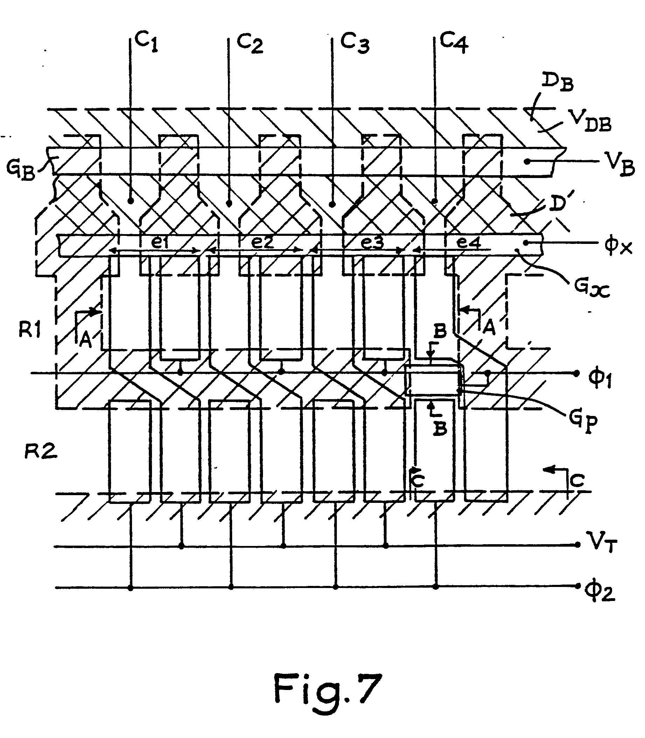

On décrira maintenant avec référence aux figures 7 à 9 un autre mode de réalisation de la barrette multilinéaire conforme à la présente invention.

Dans ce mode de réalisation, la zone photosensible de la barrette multilinéaire est identique à la zone photosensible du mode de réalisation des figures 2 à 6. De même, les registres $R_1$ et $R_2$ à décalage à transfert de charge de type CCD sont identiques dans les deux modes de réalisation. Les différences entre les deux modes de réalisation résident dans le fait que, tout d'abord, la grille de passage $G_P$ entre les registres $R_1$ et $R_2$ est commandée par le potentiel de commande $\emptyset_1$ qui commande le transfert des charges dans le registre $R_1$. D'autre part, l'interface entre les photodiodes de la zone photosensible et les entrées des étages du registre à décalage $R_1$ est réalisé par un dispositif d'injection en charge ou DIC associé à un dispositif anti-éblouissement. Le dispositif d'injection en charge est particulièrement intéressant dans le cas où la capacité des photodétecteurs et de leurs connexions est importante.

Comme représenté sur la figure 7, le dispositif d'injection en charge ou DIC est constitué par une diode D' et par une grille de passage $G_X$ reliée à un potentiel $\emptyset_X$ qui contrôle le passage des charges de la diode D' vers l'entrée d'un étage correspondant $e_1$, $e_2$, $e_3$, $e_4$ du registre à décalage $R_1$. Le dispositif d'injection en charge est en fait constitué par un transistor MOS dont le drain est réalisé par la diode D', la grille par $G_X$ et la source induite par l'étage d'entrée du registre $R_1$.

De plus, dans le mode de réalisation de la figure 7, la barrette multilinéaire comporte, sur le côté de la diode D' opposé au registre $R_1$, une grille $G_B$ portée a une tension fixe $V_B$ et une diode $D_B$ portée à un potentiel de polarisation $V_{DB}$ formant un dispositif anti-éblouissement.

Ainsi lorsque la charge signal transférée est trop importante par rapport à la capacité de chaque étage du registre $R_1$, les charges en excés sont évacuées par dessus la barriére de potentiel formée sous la grille $G_B$.

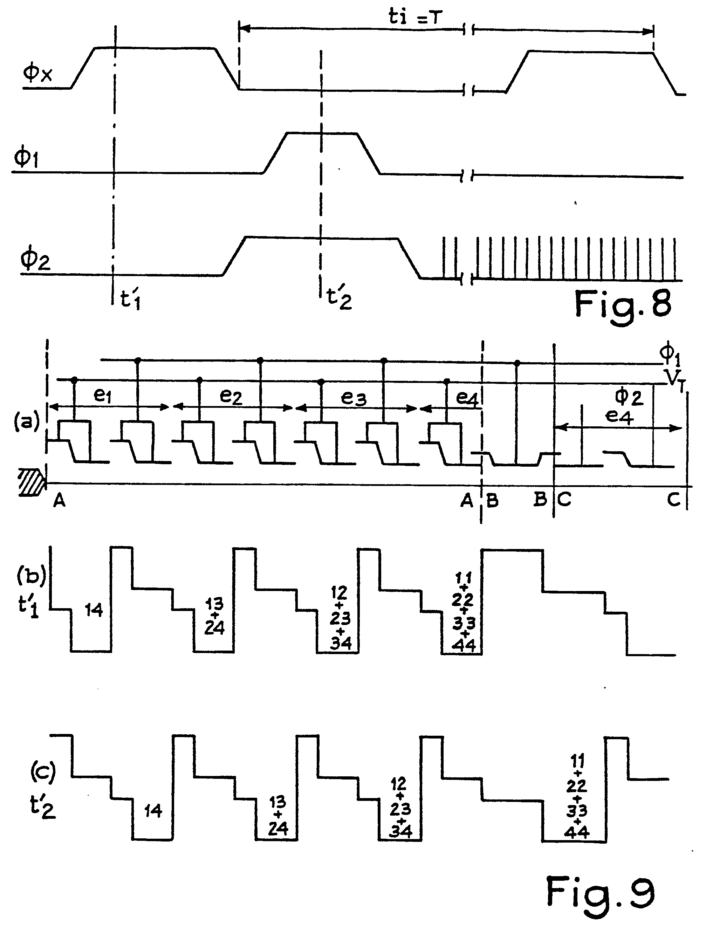

On décrira maintenant, avec référence plus particulièrement aux figures 8 et 9, le fonctionnement de ce mode de réalisation de la barrette multilinéaire conforme à la présente invention dans lequel la grille de passage $G_P$ entre les $N^{ième}$ étages des registres $R_1$ et $R_2$ est controlée par la phase $\emptyset_1$ de commande du registre $R_1$.

La fgure à représente le diagramme en fonction du temps des potentiels $\emptyset_1$ et $\emptyset_2$ pendant une période d'intégration T.

Au temps $t'_1$ les phases $\emptyset_1$ et $\emptyset_2$ sont au niveau bas tandis que la phase $\emptyset_X$ est au niveau haut. Il se produit alors le transfert des charges intégrées sous les photodiodes $D_{11}$ à $D_{4P}$ dans les étages $e_1$ à $e_4$ du registre $R_1$. Les charges intégrées pendant cette période d'intégration viennent s'ajouter aux charges déjà présentes dans les étages $e_1$ à $e_4$ du registre $R_1$.

Comme $\emptyset_1$ se trouve au niveau bas, le passage entre le registre $R_1$ et le registre $R_2$ est bloqué comme représenté sur la figure 6 (b). De ce fait, les étages $e_4$ du registre $R_1$ comportent les charges 11 + 22 + 33 + 44 qui correspondent aux quatre temps d'intégration nécessaires pour le balayage par toute la barrette.

Ensuite $\emptyset_X$ est ramené au niveau bas comme représenté sur la figure 8. Une nouvelle intégration des charges dans les photodiodes peut recommencer. Au temps $t'_2$, pendant la nouvelle intégration des charges, $\emptyset_1$ et $\emptyset_2$ sont au niveau haut. De ce fait, les charges stockées sous l'étage $e_4$ du registre $R_1$ sont transférées sous l'étage $e_4$ du registre $R_2$ tandis que les charges sous les électrodes commandées par $V_T$ des étages $e_1$, $e_2$, $e_3$ du registre $R_1$ passent sous les électrodes commandées par $\emptyset_1$ des mêmes étages comme représenté à la figure 2 (c).

$\emptyset_1$ est alors ramené au niveau bas, ce qui bloque le passage entre les registres $R_1$ et $R_2$ et un potentiel périodique symbolisé par les barres verticales de la figure à est alors appliquée sur le registre $R_2$ pour réaliser le transfert des charges 11 + 22 + 33 + 44 vers l'étage de lecture où elles sont lues de la même manière que dans le mode de réalisation des figures 2 à 6.

Dans ce mode de réalisation, seulement trois signaux de commande $\emptyset_X$ et $\emptyset_1$ et $\emptyset_2$ sont nécessaires pour commander le transfert des charges de la zone photosensible vers l'étage de lecture en réalisant la fonction TDI. Toutefois,

comme la grille $G_P$ de passage entre le registre $R_1$ et le registre $R_2$ est commandée par la même phase $\emptyset_1$ que le registre $R_1$, il n'est plus possible de transférer directement la charge intégrée par les photodiodes $D_{4P}$ dans les étages $e_4$ du registre $R_2$. En conséquence, la capacité des étages du registre $R_1$ doit être plus importante que dans le mode de réalisation des figures 2 à 6.

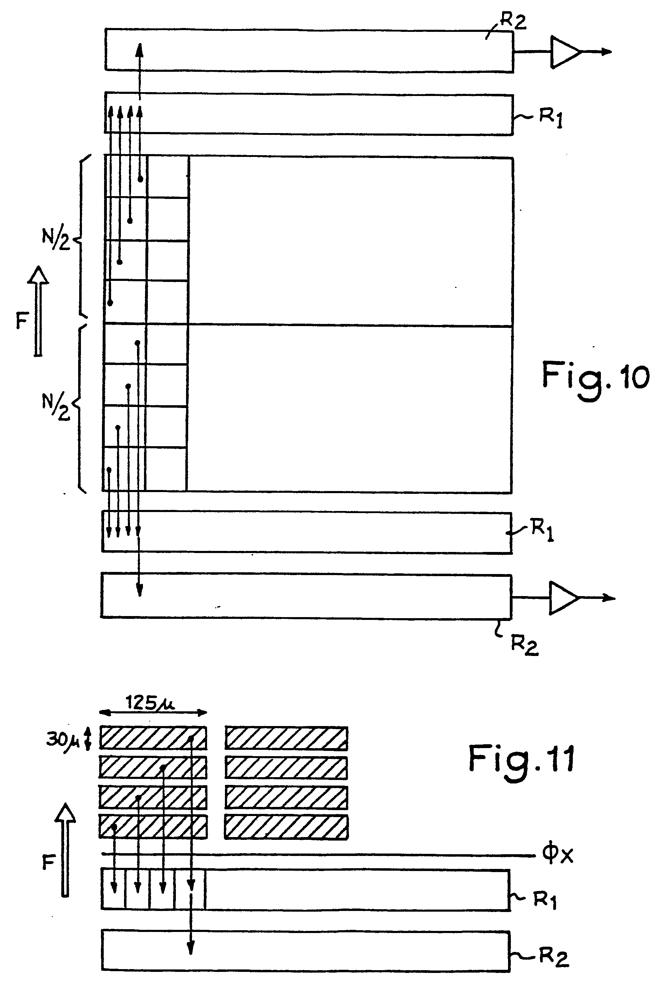

On décrira maintenant avec référence aux figures 10 et 11, deux types possibles d'utilisation de la barrette multilinéaire à transfert de charge conforme à la présente invention.

Comme représenté sur la figure 10, pour augmenter le nombre de lignes de photodétecteurs de la barrette multilinéaire, il est possible de prévoir deux parties TDI conformes aux parties TDI de la présente invention de chaque côté de la zone photosensible. Ainsi, dans le mode de réalisation représenté à la figure 10, la zone photosensible est constituée de huit lignes de P photodétecteurs, chaque ensemble de quatre lignes contigües étant connecté à une padie TDI. Un multiplexeur est prévu en sortie des deux parties TDI pour obtenir le signal utile.

Sur la figure 11, on a représenté l'application de la barrette multilinéaire de la présente invention à l'analyse de documents par contact. En général, les photodiodes utilisées dans les barrettes permettant l'analyse par contact d'une feuille de format $A_4$ dans un télécopieur sont des photodiodes carrées de dimensions 125 microns, disposées sur une seule ligne. Pour augmenter la résolution et comme représenté à la figure 11 les photodiodes sont divisées de manière à constituées quatre lignes de photodiodes de dimensions 125 microns x 30 microns au pas de 125 microns.

En fait on a décrit ci-dessus la structure d'une barrette élémentaire. Pour obtenir des barrettes multilinéaire de grande longueur on associe plusieurs barrettes élémentaires telles que décrites ci-dessus.

Ainsi dans le cas de l'analyse de documents par contact l'association de dispositifs tels que représentés à la figure 11, comprenant chacun 288 photodiodes permet d'obtenir 1728 points sur une longueur de 216 mm.

Les modes de réalisation décrits ci-dessus ont été donnés à titre illustratif et peuvent être modifiés de nombreuses manières. Ainsi les registres à décalage à transfert de charge $R_1$ et $R_2$ utilisés dans les modes de réalisation représentés sont des registres dans lesquels le transfert des charges a lieu en surface. Toutefois il est évident pour l'homme de l'art que ces registres peuvent être remplacés par des registres dans lesquels le transfert à lieu en volume ce qui diminue le bruit.

## Revendications

1. Barrette multilinéaire à transfert de charge comportant N lignes de P détecteurs

photosensibles ($D_{11}$ à $D_{4P}$), chaque ligne recevant successivement le rayonnement à détecter, des registres à décalage à transfert de charge qui assurent la sommation en phase des informations collectées sur les détecteurs occupant une même position sur les diverses lignes et un interface ($G_X$, D') entre les détecteurs ($D_{11}$ à $D_{4P}$) et les registres, caractérisée en ce que les registres à décalage à transfert de charge sont constitués par un premier registre ($R_1$) à entrées parallèles et sorties séries comportant N x P étages séparés en groupes de N étages ($e_1$, $e_2$, $e_3$, $e_4$) dans lesquels chaque étage est relié à un détecteur de même position sur les diverses lignes, ledit registre réalisant le retard et la sommation des informations, et par un deuxième registre ($R_2$) à entrées parallèles et sorties séries comportant au moins P étages et communiquant avec le premier registre ($R_1$) au niveau des $N^{ièmes}$ étages par l'intermédiaire d'une grille de passage ($G_P$), le deuxième registre transférant les charges sommées vers un étage de lecture (D) donnant en sortie uniquement un signal correspondant à la somme des informations collectées sur les detecteurs occupant une même position sur les diverses lignes.

2. Barrette multilinéaire selon la revendication 1, caractérisée en ce que les deux registres à décalage à transfert de charge ($R_1$, $R_2$) sont des registres monophasés.

3. Barrette multilinéaire selon la revendication 2, caractérisée en ce que la phase continue ($V_T$) est identique pour les deux registres ($R_1$, $R_2$).

4. Barrette multilinéaire selon la revendication 3, caractérisée en ce que le deuxième registre ($R_2$) comporte N x P étages.

5. Barrette multilinéaire selon l'une quelconques des revendications 3 et 4, caractérisée en ce que les couples d'électrodes des registres $R_1$ et $R_2$ reliés à la phase commune sont décalés d'un demi-étage.

6. Barrette multilinéaire selon l'une quelconque des revendications 1 à 5, caractérisée en ce que la communication entre les deux registres ($R_1$, $R_2$) est realisée, au niveau des $N^{ièmes}$ étages du premier registre ($R_1$), par ladite grille de passage ($G_P$) portée à un potentiel périodique ($Ø_P$, $Ø_1$).

7. Barrette multilinéaire selon la revendication 6, caractérisée en ce que le potentiel périodique ($Ø_P$, $Ø_1$) appliqué sur la grille de passage ($G_P$) est la phase de commande alternative ($Ø_1$) du premier registre ($R_1$) à décalage.

8. Barrette multilinéaire selon la revendication 6, caractérisée en ce que le potentiel périodique ($Ø_P$) appliqué sur la grille de passage ($G_P$) permet le transfert direct des charges intégrées dans les photodiodes ($D_{IN}...D_{PN}$) de la $N^{ième}$ ligne dans les étages correspondants du second registre ($R_2$).

9. Barrette multilinéaire selon l'une quelconque des revendications 1 à 8, caractérisée en ce que l'interface entre les détecteurs ($D_{11}$ à $D_{NP}$) et le premier registre à décalage ($R_1$) est constitué par un dispositif d'injection en charge de l'information prévu entre chaque connexion ($C_1$, $C_2$, $C_3$, $C_4$) reliée à un détecteur et une entrée du premier registre ($R_1$), ce dispositif assurant également la polarisation du détecteur.

10. Barrette multilinéaire selon la revendication 9, caractérisée en ce que chaque dispositif d'injection en charge est constitué par une diode (D') d'injection des charges reliée à l'une des connexions ($C_1$, $C_2$, $C_3$, $C_4$) et une grille d'injection ($G_X$) qui contrôle le passage des charges vers l'entrée d'un étage du premier registre à décalage ($R_1$).

11. Barrette multilinéaire selon l'une quelconque des revendications 9 et 10, caractérisée en ce que le dispositif d'injection est associé à un dispositif anti-éblouissement.

12. Barrette multilinéaire selon la revendication 11, caractérisée en ce que le dispositif anti-éblouissement est constitué par une diode ($D_B$) séparée de la diode d'injection (D') par une grille écran ($G_B$) portée à une tension fixe ($V_{DB}$).

13. Procédé d'analyse d'une barrette multilinéaire selon l'une quelconque des revendications 1 à 12, caractérisé en ce que
- à la fin de chaque temps d'intégration, on envoie les charges intégrées par les photodétecteurs ($D_{11}$ à $D_{4P}$) occupant une même position sur les diverses lignes, dans les étages correspondants du premier registre ($R_1$) à décalage à transfert de charge où elles viennent s'ajouter aux charges déjà présentes, on transfère les charges contenues dans les $N^{ièmes}$ étages du premier registre ($R_1$) vers les étages correspondants du deuxième registre à décalage ($R_2$) puis, dans le premier registre ($R_1$), on transfère d'un étage les charges, et
- pendant une partie du temps d'intégration suivant, on transfère les charges du second registre ($R_2$) vers l'étage de lecture qui réalise la lecture des P signaux utiles.

14. Procédé selon la revendication 12, caractérisé en ce que les charges intégrées dans la $N^{ième}$ ligne de photodétecteurs sont transférées directement dans les étages correspondants du second registre ($R_2$).

**Patentansprüche**

1. Mehrzeilige, mit Ladungsüberführung arbeitende Detektorleiste mit N Zeilen von P lichtempfindlichen Detektoren ($D_{11}$ bis $D_{4P}$), wobei nacheinander jede Zeile die zu erfassende Strahlung empfängt, mit Ladungsüberführungs-Schieberegistern, die die phasenrichtige Aufsummierung der Informationen gewährleisten, die an den Detektoren abgenommen werden, welche eine selbe Position in den verschiedenen Zeilen einnehmen, und mit einer Schnittstelle ($G_X$, D') zwischen den Detektoren ($D_{11}$ bis $D_{4P}$) und den Registern, dadurch gekennzeichnet, daß die Ladungsüberführungs-Schieberegister aus einem ersten Register ($R_1$) mit parallelen Eingängen und seriellen Ausgängen besteht, das N x P Stufen umfaßt, die in Gruppen von N Stufen ($e_1$, $e_2$, $e_3$,

$e_4$) getrennt sind, wovon jede Stufe mit einem in den verschiedenen Zeilen die selbe Position einnehmenden Detektor verbunden ist, wobei das genannte Register die Verzögerung und die Aufsummierung der Informationen bewirkt, und aus einem zweiten Register ($R_2$) mit parallelen Eingängen und seriellen Ausgängen besteht, das wenigstens P Stufen umfaßt und mit dem ersten Register ($R_1$) in Höhe der N-ten Stufen über eine Durchlaufelektrode ($G_P$) in Verbindung steht, wobei das zweite Register die aufsummierten Ladungen zu einer Auslesestufe (D) überführt, an deren Ausgang lediglich ein Signal abgegeben wird, das der Aufsummierung der an den Detektoren abgenommenen Informationen entspricht, welche in den verschiedenen Zeilen eine selbe Position einnehmen.

2. Mehrzeilige Detektorleiste nach Anspruch 1, dadurch gekennzeichnet, daß die beiden Ladungsüberführungs-Schieberegister ($R_1$, $R_2$) einphasige Register sind.

3. Mehrzeilige Detektorleiste nach Anspruch 2, dadurch gekennzeichnet, daß die kontinuierliche Phase ($V_T$) für beide Register ($R_1$, $R_2$) identisch ist.

4. Mehrzeilige Detektorleiste nach Anspruch 3, dadurch gekennzeichnet, daß das zweite Register ($R_2$) N x P Stufen umfaßt.

5. Mehrzeilige Detektorleiste nach einem der Ansprüche 3 oder 4, dadurch gekennzeichnet, daß die Elektrodenpaare der mit der gemeinsamen Phase verbundenen Register $R_1$ und $R_2$ um eine halbe Stufe verschoben sind.

6. Mehrzeilige Detektorleiste nach einem der Ansprüche 1 bis 5, dadurch gekennzeichnet, daß die Verbindung zwischen den beiden Registern ($R_1$, $R_2$) in der Höhe der N-ten Stufen des ersten Registers ($R_1$) über die genannte Durchlaufelektrode ($G_P$) erfolgt, welche auf ein periodisches Potential ($0_P$, $0_1$) gebracht wird.

7. Mehrzeilige Detektorleiste nach Anspruch 6, dadurch gekennzeichnet, daß das an die Durchlaufelektrode ($G_P$) angelegte periodische Potential ($0_P$, $0_1$) die Wechselstrom-Steuerungsphase ($0_1$) des ersten Schieberegisters ($R_1$) ist.

8. Mehrzeilige Detektorleiste nach Anspruch 6, dadurch gekennzeichnet, daß das an die Durchlaufelektrode ($G_P$) angelegte periodische Potential ($0_P$) die unmittelbare Überführung der in den Photodioden ($D_{IN}$... $D_{PN}$) integrierten Ladungen der N-ten Zeile in die entsprechenden Stufen des zweiten Registers ($R_2$) ermöglicht.

9. Mehrzeilige Detektorleiste nach einem der Ansprüche 1 bis 8, dadurch gekennzeichnet, daß die Schnittstelle zwischen den Detektoren ($D_{11}$ bis $D_{NP}$) und dem ersten Schieberegister ($R_1$) aus einer Vorrichtung zur Ladungseinspeisung der Information besteht, die zwischen jeder Verbindung ($C_1$, $C_2$, $C_3$, $C_4$) vorgesehen ist, die mit einem Detektor und einem Eingang des ersten Registers ($R_1$) verbunden ist, wobei diese Vorrichtung auch die Polarisation des Detektors gewährleistet.

10. Mehrzeilige Detektorleiste nach Anspruch 9, dadurch gekennzeichnet, daß jede Vorrichtung zur Ladungseinspeisung aus einer Diode (D') zur Ladungseinspeisung besteht, die mit einer der Verbindungen ($C_1$, $C_2$, $C_3$, $C_4$) verbunden ist, sowie aus einer Elektrode zur Einspeisung ($G_X$), welche den Durchlauf der Ladungen zu dem Eingang einer Stufe des ersten Schieberegisters ($R_1$) steuert.

11. Mehrzeilige Detektorleiste nach einem der Ansprüche 9 oder 10, dadurch gekennzeichnet, daß die Einspeisenvorrichtung einer Elendschutzvorrichtung zugeordnet ist.

12. Mehrzeilige Detektorleiste nach Anspruch 11, dadurch gekennzeichnet, daß die Blendschutzvorrichtung aus einer Diode ($D_B$) besteht, welche von der Diode zur Einspeisung (D') durch eine auf eine feste Spannung ($V_{DB}$) gebrachte Schirmelektrode getrennt ist.

13. Verfahren zur Analyse einer mehrzeiligen Detektorleiste nach einem der Ansprüche 1 bis 12, dadurch gekennzeichnet, daß
- am Ende jeder Integrationszeit die Ladungen, die durch die Photodetektoren ($D_{11}$ bis $D_{14}$) integriert sind und eine selbe Position in den verschiedenen Zeilen einnehmen, zu den entsprechenden Stufen des ersten Schieberegisters ($R_1$) mit Ladungsüberführung geführt werden, wo sie zu den schon vorhandenen Ladungen hinzugefügt werden, und die in den N-ten Stufen des ersten Registers ($R_1$) enthaltenen Ladungen zu den enstprechenden Stufen des zweiten Schieberegisters ($R_2$) überführt werden, woraufhin in dem ersten Register ($R_1$) die Ladungen um eine Stufe überführt werden, und
- während eines Teils der folgenden Integrationszeit die Ladungen des zweiten Registers ($R_2$) zu der das Auslesen der P wirksamen Signale gewährleistenden Auslesestufe überführt werden.

14. Verfahren nach Anspruch 12, dadurch gekennzeichnet, daß die in der N-ten Zeile der Photodetektoren integrierten Ladungen unmittelbar in die entsprechenden Stufen des zweiten Registers ($R_2$) überführt werden.

**Claims**

1. A charge transfer multilinear strip comprising N lines of P photosensitive detectors ($D_{11}$ through $D_{4P}$), each line receiving the radiation to be detected successively, charge transfer shift registers which ensure the summation in phase of the collected information at the detectors occupying the same position on various lines and an interface ($G_X$, D') between the detectors ($D_{11}$ through $D_{4P}$) and the registers, characterized in that charge transfer shift registers are constituted by a first register ($R_1$) with parallel inputs and series outputs comprising N x P stages separated into groups of N stages ($e_1$, $e_2$, $e_3$ and $e_4$) in which each stage is connected with a detector in the same position on the various lines, said register bringing about a delay and summation of the information, and by a second register ($R_2$) with parallel inputs and series outputs comprising at least P stages and communicating with the first register ($R_1$) at the level of the Nth stages by the intermediary of a pass grid ($G_P$), the said register transferring the summated charges to a read stage (D) providing at a single output a signal corresponding to the sum of the information collected on the detectors occupying the same position on the various lines.

2. The multilinear strip as claimed in claim 1, characterized in that the two charge transfer shift registers ($R_1$ and $R_2$) are monophase registers.

3. The multilinear strip as claimed in claim 2, characterized in that the continuous phase ($V_T$) is identical for the two registers ($R_1$ and $R_2$).

4. The multilinear strip as claimed in claim 3, characterized in that the second register ($R_2$) comprises N x P stages.

5. The multilinear strip as claimed in claim 3 or claim 4, characterized in that the pairs of electrodes of the registers $R_1$ and $R_2$ connected to the common phase are offset by half a stage.

6. The multilinear strip as claimed in any one of the claims 1 through 5, characterized in that the communication between the two registers ($R_1$ and $R_2$) is effected, at the level of the Nth stages of the first register ($R_1$), by the said pass grid ($G_P$) placed at a cyclical potential ($Ø_P$ and $Ø_1$).

7. The multilinear strip as claimed in claim 6, characterized in that the cyclical potential ($Ø_P$ and $Ø_1$) applied to the pass grid ($G_P$) is the alternating control phase ($Ø_1$) of the first shift register ($R_1$).

8. The multilinear strip as claimed in claim 6, characterized in that the cyclical potential ($Ø_P$) applied to the pass grid ($G_P$) permits the direct transfer of the charges integrated in the photodiodes ($D_{1N}...D_{PN}$) of the Nth line in the corresponding stages of the second register ($R_2$).

9. The multilinear strip as claimed in any one of the claims 1 through 8, characterized in that the interface between the detectors ($D_{11}$ through $D_{NP}$) and the first shift register ($R_1$) is constituted by a charge injection means for the information provided between each connections ($C_1$, $C_2$, $C_3$ and $C_4$) connected with a detector and an input of the first register ($R_1$), said means ensuring also the polarization of the detector.

10. The multilinear strip as claimed in claim 9, characterized in that the each charge injection means is constituted by a charge injection diode (D') connected with one of the connections ($C_1$, $C_2$, $C_3$ and $C_4$) and an injection grid ($G_X$) which controls the passage of the charges towards the input of a stage of the first shift register ($R_1$).

11. The multilinear strip as claimed in claim 9 or claim 10, characterized in that the injection means is associated with an anti-glare means.

12. The multilinear strip as claimed in claim 11, characterized in that the anti-glare device is constituted by a diode ($D_B$) separated from the injection diode (D') by a grid screen ($G_B$) held at a fixed voltage ($V_{DB}$).

13. A method for the analysis of a multilinear strip as claimed in any one of the claims 1 through 12, characterized in that

- at the end of each integration time charges integrated by the photodetectors ($D_{11}$ through $D_{4P}$) occupying the same position on the various lines, are transmitted to the corresponding stages of the first charge transfer shift register ($R_1$) where they undergo addition to the charges already present there, the charges contained in the Nth stages of the first register ($R_1$) are transferred to the corresponding stages of the second shift register ($R_2$) and then, in the first register ($R_2$), the charges of one stage are transferred and

- during part of the ensuing integration time the charges of the second register ($R_2$) are transferred to the read stage which performs the reading of the p useful signals.

14. The method as claimed in claim 12, characterized in that the charges integrated in the Nth line of the photodetectors are transferred directly to the corresponding stages of the second register ($R_2$).

Fig.1

Fig. 2

Fig.3

Fig.5

Fig.4

Fig.6

Fig.7

Fig.8

Fig.9

Fig. 10

Fig. 11